# EUROPÄISCHE PATENTANMELDUNG

(11) **EP 2 692 819 A1**
(43) Veröffentlichungstag der Anmeldung: **05.02.2014**
(21) Anmeldenummer: 12178939.0
(22) Anmeldetag: 02.08.2012
(51) Int. Cl.: C09K 3/14, B24D 3/14, C04B 35/111

(54) **Schleifkorn mit Basisfläche und Erhebungen**

(71) Anmelder: Robert Bosch GmbH, 70442 Stuttgart (DE)
(72) Erfinder: Fuenfschilling, Stefan, 78337 Öhningen (DE); Jenni, Adrian, 9000 St. Gallen (CH); Rohner, Thomas, 8546 Kefikon (CH)

(57) **Zusammenfassung**

Die Erfindung betrifft einerseits ein Schleifkorn (110) mit einer Basisfläche (115) und mindestens zwei sich davon erstreckenden Erhebungen (113), dadurch gekennzeichnet, dass mindestens eine Erhebung (113), bevorzugt mehrere Erhebungen (113), besonders bevorzugt jede Erhebung (113) mindestens einen höchsten Punkt (116) enthält, dessen senkrechte Projektion auf die Ebene (E) der Basisfläche (115) innerhalb der konvexen Hülle der Basisfläche (115), bevorzugt innerhalb der Basisfläche (115; 315; 415) liegt. Das Schleifkorn (110) kann ein keramisches Material enthalten, insbesondere polykristallines α-Al₂O₃. Zudem sind Gesamtheiten von Schleifkörnern (110), Verfahren zum Herstellen von Schleifkörnern (110), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise weisen die in WO 2010/077491 offenbarten Schleifkörner mehrere Spitzen auf, die eine Schleifwirkung hervorrufen können. Allerdings ist dieses Schleifkorn in keiner der Orientierungen, in denen es mit einer flachen Seite auf einer Schleifmittel-Unterlage liegen kann, besonders stabil gegenüber einem Umkippen aufgrund der beim Bearbeiten einer Oberfläche wirkenden Kräfte. Dieses Schleifkorn kann daher beim Schleifen relativ leicht aus dem Bindemittel ausbrechen. Zudem müssen diese Schleifkörner mit Hilfe einer elektrostatischen Streuung auf eine Unterlage aufgestreut werden, damit sie dort mit ausreichender Wahrscheinlichkeit in gewünschter Weise orientiert sind.

Es ist daher eine Aufgabe der vorliegenden Erfindung, die Nachteile des Standes der Technik zumindest teilweise zu beheben. Insbesondere soll also ein Schleifkorn bereitgestellt werden, welches stabiler gegenüber den beim Schleifen herrschenden Kippkräften ist und insbesondere auch beim mechanischen Aufstreuen auf eine Unterlage mit möglichst hoher Wahrscheinlichkeit in gewünschter Orientierung zu liegen kommt. Beispielsweise sollten Spitzen des Schleifkorns in dieser gewünschten Orientierung von der Unterlage weg weisen. Diese Aufgabe wird gelöst durch ein Schleifkorn mit definierter Form, welches eine Basisfläche und mindestens zwei sich davon erstreckende Erhebungen aufweist. Erfindungsgemäss enthält mindestens eine Erhebung mindestens einen höchsten Punkt, dessen senkrechte Projektion auf die Ebene der Basisfläche innerhalb der konvexen Hülle der Basisfläche und bevorzugt sogar innerhalb der Basisfläche selbst liegt. Als höchster Punkt einer Erhebung wird dabei ein Punkt der Erhebung angesehen, der den grössten senkrecht zur Basisfläche gemessenen Abstand von der Basisfläche aufweist. Die konvexe Hülle der Basisfläche ist die kleinste konvexe Menge, die die Basisfläche vollständig enthält.

Aufgrund der erfindungsgemässen Lage der Projektion des höchstens Punkts ist ein Schleifkorn, welches mit seiner Basisfläche auf einer Schleifmittel-Unterlage aufliegt, besonders stabil gegenüber Kippkräften, die beim Eingriff der Erhebung mit einer bearbeiteten Oberfläche entstehen. Des Weiteren kann durch die erfindungsgemässe Ausbildung erreicht werden, dass auch durch eine mechanische Streuung zumindest ein Grossteil der Schleifkörner mit ihrer Basisfläche auf der Schleifmittel-Unterlage zu liegen kommt. Somit weisen die Erhebungen dieses Grossteils der Schleifkörner von der Unterlage weg und auf eine zu bearbeitende Oberfläche hin.

Die Basisfläche des Schleifkorns ist bevorzugt im Wesentlichen eben. Ein derartiges Schleifkorn kann besonders stabil auf einer Schleifmittel-Unterlage fixiert werden. Es ist jedoch auch denkbar, dass die Basisfläche eine geringfügige konkave und/oder eine konvexe Wölbung aufweist. Eine derartige Wölbung kann bei der weiter unten beschriebenen Herstellung des Schleifkorns entstehen.

Der höchste Punkt mindestens einer Erhebung, bevorzugt mehrerer Erhebungen, besonders bevorzugt aller Erhebungen kann als Spitze ausgebildet sein. Der Punkt wird als Spitze verstanden, wenn ein imaginärer Konus gedanklich derart über die Erhebung gestülpt werden kann, dass die Erhebung ganz im Inneren des Konus liegt und der Punkt die Spitze des Konus bildet. Bevorzugt beträgt der Öffnungswinkel des Konus weniger als 150°, weiter bevorzugt weniger als 120° und besonders bevorzugt weniger als 90°.

Alternativ dazu ist es aber auch möglich, dass die Menge der Punkte einer Erhebung mit maximalem Abstand von der Basisfläche einen ebenen, flächigen Bereich bildet, also eine Art von Plateau, welches parallel zur Basisfläche des Schleifkorns verläuft.

In vielen vorteilhaften Ausgestaltungen kann das Schleifkorn mindestens zwei, bevorzugt mindestens drei Teilkörper enthalten oder daraus bestehen, die jeweils mindestens eine der Erhebungen, bevorzugt genau eine Erhebung, des Schleifkorns aufweisen oder bilden. Bei den Teilkörpern handelt es sich um gedachte Körper, die das Schleifkorn nur gedanklich enthält. Dass das Schleifkorn mindestens zwei oder mehr Teilkörper enthält, ist also nicht zwingend dahingehend zu verstehen, dass das Schleifkorn aus zwei oder mehr zunächst separat hergestellten Teilkörpern zusammengefügt wurde oder ist. Stattdessen sind die erfindungsgemässen Schleifkörner bevorzugt einstückig ausgebildet und werden auch einstückig hergestellt.

Mindestens ein erster Teilkörper kann durch eine geometrische Abbildung in einen zweiten Teilkörper überführbar sein, wobei die geometrische Abbildung durch eine Verschiebung parallel zur Ebene der Basisfläche gebildet ist. Diese Ausgestaltung führt dazu, dass das Schleifkorn auch mehrere zueinander ähnliche Schneidkanten aufweist, wobei diese Schneidkanten ein und desselben Schleifkorns in einer wohldefinierten relativen Lage zueinander angeordnet sind. Bevorzugt ist jeder erste Teilkörper in jeden zweiten Teilkörper durch eine jeweilige solche geometrische Abbildung überführbar.

Alternativ kann die genannte geometrische Abbildung auch durch eine Kombination aus einer Verschiebung parallel zur Ebene der Basisfläche und einer Drehung um eine senkrecht zur Basisfläche verlaufende Drehachse gebildet sein. Bevorzugt ist jeder erste Teilkörper in jeden zweiten Teilkörper durch eine jeweilige solche geometrische Abbildung überführbar.

Falls das Schleifkorn zu viele Teilkörper mit jeweils mindestens einer Erhebung enthält oder daraus besteht, so kann die Gefahr bestehen, dass das Schleifkorn insgesamt eine zu grosse Ausdehnung parallel zur Ebene der Basisfläche aufweist. Hierdurch könnte ein Schleifmittel mit flexibler Unterlage, auf der mehrere dieser Schleifkörner fixiert sind, zu steif werden. Daher ist es in einigen Ausführungsbeispielen bevorzugt, wenn das Schleifkorn höchstens 9 Teilkörper enthält oder daraus besteht. Alternativ oder zusätzlich kann der Durchmesser der Basisfläche im Bereich von 0,3 mm bis 6 mm, bevorzugt von 0,8 mm bis 5 mm, besonders bevorzugt von 1,1 mm bis 4 mm liegen. Der genannte Durchmesser wird verstanden als der kleinste Durchmesser eines Kreises, welcher die Basisfläche enthält; er kann somit als Durchmesser eines Hüllkreises der Basisfläche aufgefasst werden.

In einigen Ausgestaltungen kann mindestens ein, bevorzugt mehrere, besonders bevorzugt jeder Teilkörper einen Basiskörper enthalten sowie mindestens einen Aufsatzkörper, der eine der Erhebungen des Schleifkorns bildet. Die Unterseite des Basiskörpers kann einen Teil der Basisfläche des Schleifkorns bilden. Die Gesamtheit der Unterseiten aller Basiskörper kann zusammen die gesamte Basisfläche des Schleifkorns bilden.

Der Basiskörper kann eine seiner Unterseite gegenüberliegende Oberseite enthalten, und der Aufsatzkörper kann eine Unterseite aufweisen, die auf der Oberseite des Basiskörpers angeordnet ist. Die Aussenkontur der Unterseite des Aufsatzkörpers kann vollständig innerhalb der Aussenkontur der Oberseite des Basiskörpers verlaufen. Die hier verwendeten Begriffe "Oberseite" und "Unterseite" sind nicht so zu verstehen, dass die Oberseite des Basiskörpers vollständig an der Oberfläche des Schleifkorns liegt: Der Teil der Oberseite des Basiskörpers, auf dem der Aufsatzkörper angeordnet ist, ist nur eine gedankliche Fläche, welche im Inneren des Schleifkorns verläuft. Ebenso ist die gesamte Unterseite des Aufsatzkörpers eine rein gedankliche Fläche, welche mit dem genannten Teil der Oberseite des Basiskörpers übereinstimmt und im Inneren des Schleifkorns verläuft.

Wenn die Aussenkontur der Unterseite des Aufsatzkörpers innerhalb der Aussenkontur der Oberseite des Basiskörpers verläuft, bildet der Übergangsbereich vom Basiskörper zum Aufsatzkörper eine Art von Stufe, welche die Aussenkontur der Unterseite des Aufsatzkörpers vollumfänglich umschliesst.

Zudem kann es in vielen Ausführungsformen vorteilhaft sein, wenn der genannte Übergangsbereich zwischen Basiskörper und Aufsatzkörper keine scharfe Kante bildet, da hierdurch ein unvorteilhafter Kraftfluss entstehen würde. Dieser könnte insbesondere im Falle der bevorzugten keramischen Schleifkörner zu einem vergleichsweise leichten Brechen in diesem Übergangsbereich führen. Stattdessen kann der Übergangsbereich zwischen Basiskörper und Aufsatzkörper beispielsweise eine Rundung und/oder eine Fase enthalten; auch diese Varianten sind von der Erfindung erfasst. Die Ausdehnung der Rundung oder der Fase, insbesondere die Ausdehnung in einer Ebene parallel zur Unterseite des Basiskörpers und/oder senkrecht zur Unterseite des Basiskörpers, kann bis zu 1/5 der Höhe des Aufsatzkörpers oder der unten definierten Gesamthöhe des Schleifkorns betragen. In einigen Ausführungsformen sollte die Ausdehnung der Rundung oder der Fase mindestens 1/20, bevorzugt mindestens 1/15 der Höhe des Aufsatzkörpers oder der Gesamthöhe des Schleifkorns betragen. Zudem erlaubt eine Fase oder eine Rundung eine einfachere Entfernung eines Schleifkorn-Vorprodukts aus einer Giessform, beispielsweise in einem wie unten näher beschriebenen Verfahren.

Es ist auch denkbar und liegt im Rahmen der Erfindung, dass ein erster Aufsatzkörper wie oben beschrieben auf der Oberseite des Basiskörpers angeordnet ist und ein zweiter Aufsatzkörper auf einer Oberseite des ersten Aufsatzkörpers angeordnet ist. Es sind dann also mehrere Aufsatzkörper übereinander gestapelt. In jeder dieser Varianten sind der Basiskörper und die Aufsatzkörper ebenfalls nur als gedachte Teilkörper zu verstehen; das Schleifkorn ist bevorzugt einstückig ausgebildet und wird bevorzugt einstückig hergestellt.

Bevorzugt sollte jeder Punkt der Aussenkontur der Unterseite des Aufsatzkörpers einen Abstand von der Aussenkontur der Oberseite des Basiskörpers haben, der mindestens 1%, bevorzugt mindestens 2%, weiter bevorzugt mindestens 10%, noch weiter bevorzugt mindestens 20% und besonders bevorzugt mindestens 30% der unten definierten Gesamthöhe des Schleifkorns beträgt.

Eine geometrisch einfache Form ergibt sich, wenn der Basiskörper die Form eines Zylinders hat, dessen Grundfläche die Unterseite des Basiskörpers und damit insbesondere einen Teil der Basisfläche des Schleifkorns bildet und dessen Deckfläche die Oberseite des Basiskörpers bildet. Unter einem Zylinder wird hier und im Folgenden allgemein ein Körper verstanden, der von einer Grundfläche und einer Deckfläche sowie von einer Mantelfläche begrenzt wird. Die Grundfläche und die Deckfläche sind dabei bevorzugt im Wesentlichen eben und ebenfalls bevorzugt im Wesentlichen zueinander parallel. Die Mantelfläche wird durch eine Schar von zueinander im Wesentlichen zueinander parallelen Strecken gebildet. Wenn diese Strecken im Wesentlichen senkrecht zur Grundfläche und zur Deckfläche verlaufen, so ergibt sich ein gerader Zylinder. Schiefe Zylinder sind jedoch ebenso denkbar und liegen im Rahmen der Erfindung.

Die Aussenkontur der Grundfläche und der Deckfläche des Zylinders kann mindestens einen geradlinigen und/oder mindestens einen kurvenförmigen Abschnitt umfassen. Die Grundfläche und die Deckfläche können also nicht nur ein Kreis, sondern beispielsweise auch eine Ellipse oder ein Polygon sein. Sind die Grundfläche und die Deckfläche des Zylinders ein Polygon, so hat das Schleifkorn die Form eines Prismas. Das Polygon kann konvex sein oder mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein.

Alternativ kann der Basiskörper auch die Form eines Kegelstumpfs haben, dessen Grundfläche die Unterseite des Basiskörpers und damit insbesondere einen Teil der Basisfläche des Schleifkorns bildet und dessen Deckfläche die Oberseite des Basiskörpers bildet. Ein Kegelstumpf wird hierbei allgemein als ein geometrischer Körper verstanden, der von einer im Wesentlichen ebenen Grundfläche, einer im Wesentlichen ebenen Deckfläche und einer Vielzahl von im Wesentlichen geraden Mantelstrecken begrenzt wird, wobei jeder Punkt der Aussenkontur der Grundfläche durch jeweils eine der Mantelstrecken mit einem gemeinsamen imaginären Punkt verbunden ist, der jedoch ausserhalb des Körpers und auf der der Grundfläche abgewandten Seite der Deckfläche liegt. Diese Definition ist also weder auf Kegelstümpfe mit kreisförmiger Grundfläche noch auf gerade Kegelstümpfe beschränkt. Insbesondere kann es sich bei dem Kegelstumpf um einen Pyramidenstumpf handeln, bei dem die Grundfläche von einem Polygon gebildet wird. Das Polygon kann konvex sein oder mindestens eine überstumpfe Ecke aufweisen. Es kann beispielsweise ein Dreieck, insbesondere ein gleichschenkliges oder sogar ein gleichseitiges Dreieck, ein Viereck, insbesondere ein Parallelogramm oder sogar ein Rechteck oder sogar ein Quadrat, ein insbesondere reguläres Fünfeck oder ein insbesondere reguläres Sechseck sein.

Auch mindestens eine der Erhebungen, insbesondere mindestens einer der Aufsatzkörper, kann die Form eines Zylinders oder eines Kegelstumpfs haben. Dieser Zylinder oder Kegelstumpf kann eines, mehrere oder sämtliche der Merkmale aufweisen, die oben im Zusammenhang mit dem Basiskörper beschrieben wurden. Insbesondere kann die Erhebung, insbesondere der Aufsatzkörper, also die Form eines Quaders, eines geraden kreisförmigen Zylinders oder einer dreiseitigen Pyramide haben. Die Erhebung, insbesondere der Aufsatzkörper, kann auch die Form eines Kegels aufweisen. Analog zur obigen Definition eines Kegelstumpfs ist auch der hier verwendete Begriff des Kegels weder auf kreisförmige Kegel noch auf gerade Kegel beschränkt. Insbesondere kann der Kegel also beispielsweise eine Pyramide sein, bei der die Grundfläche durch ein Polygon gebildet ist.

Der Basiskörper und/oder die Erhebung, insbesondere der Aufsatzkörper, können auch jeweils eine Grundfläche und eine Deckfläche aufweisen, die gegeneinander verdreht sind, so dass beispielsweise der Basiskörper und/oder die Erhebung, insbesondere der Aufsatzkörper, die Form eines verdrillten Kegelstumpfs, insbesondere eines verdrillten Pyramidenstumpfs, oder eines verdrillten Prismas aufweist. Die Erhebung, insbesondere der Aufsatzkörper, kann auch die Form eines verdrillten Kegels, insbesondere einer verdrillten Pyramide, aufweisen. Der Verdrillwinkel zwischen der Unterseite und der Oberseite des Basiskörpers und/oder der Erhebung kann im Bereich von 20° bis 180° liegen und beispielsweise 45° betragen.

Ein verdrillter Basiskörper kann besser in einem auf einer Schleifmittel-Unterlage aufgetragenen Grundbinder verankert werden. Eine solche Verankerung ist besonders wirkungsvoll, wenn der Verdrillwinkel etwa 45° beträgt. In diesem Falle stehen nämlich die Ecken der Unterseite des Basiskörpers unter der Oberseite des Basiskörpers hervor. Eine verdrillte Erhebung kann dazu beitragen, dass die von einer bearbeiteten Oberfläche abgetragenen Späne wie mit einem Bohrer von der Oberfläche weggeführt werden, was die Wärmeentwicklung reduzieren kann. Zudem verdreht sich die in Kontakt mit einer bearbeiteten Oberfläche stehende Querschnittsfläche einer verdrillten Erhebung, wenn diese nach und nach abgetragen wird. Selbst wenn also ein Schleifwerkzeug mit dem erfindungsgemässen Schleifkorn immer nur entlang einer einzigen Richtung relativ zur bearbeiteten Oberfläche bewegt wird, so verändert sich mit der Zeit dennoch die Schleifwirkung, was in einigen Fällen vorteilhaft sein kann. Insbesondere kann während des Abtragens mindestens einmal eine ideal ausgerichtete Schneidkante mit einer bearbeiteten Oberfläche in Kontakt kommen.

Die Formen des Basiskörpers und der Erhebung, insbesondere des Aufsatzkörpers, können unabhängig voneinander gewählt werden. So ist es beispielsweise denkbar, dass der Basiskörper ein Quader ist und die Erhebung, insbesondere der Aufsatzkörper, eine dreiseitige Pyramide. Zudem ist es denkbar und liegt im Rahmen der Erfindung, dass das Schleifkorn mindestens zwei verschieden ausgestaltete Erhebungen aufweist. Beispielsweise kann eine erste Erhebung, insbesondere ein erster Aufsatzkörper, als Prisma mit rechteckiger Grundfläche und eine zweite Erhebung, insbesondere ein zweiter Aufsatzkörper, als Prisma mit einer dreieckigen Grundfläche ausgebildet sein. In einigen Varianten ist es denkbar, dass mindestens ein Teilkörper zwei verschieden ausgestaltete Erhebungen aufweist. Alternativ oder zusätzlich kann auch ein erster Teilkörper eine erste Erhebung aufweisen und ein zweiter Teilkörper eine zweite Erhebung, die von der ersten Erhebung verschieden ist.

Das Schleifkorn kann zwei oder mehr Erhebungen aufweisen, die identische senkrecht zur Basisfläche gemessene Höhen aufweisen. Dies ist insbesondere dann der Fall, wenn das Schleifkorn mehrere Teilkörper mit jeweils mindestens einer Erhebung enthält, wobei die Teilkörper durch eine wie oben beschriebene geometrische Abbildung ineinander überführbar sind. Es ist jedoch auch denkbar, dass das Schleifkorn zwei verschieden ausgestaltete Erhebungen aufweist, deren Höhen identisch sind.

Es ist ebenfalls möglich und liegt im Rahmen der Erfindung, dass das Schleifkorn eine erste Erhebung mit einer senkrecht zur Basisfläche gemessenen ersten Höhe aufweist sowie eine zweite Erhebung mit einer senkrecht zur Basisfläche gemessenen zweiten Höhe, welche kleiner ist als die erste Höhe. Mit anderen Worten kann das Schleifkorn also mindestens zwei Erhebungen mit voneinander verschiedenen Höhen aufweisen. Wenn ein derartiges Schleifkorn mit seiner Basisfläche auf einer Schleifmittel-Unterlage aufliegt, so hat eine erste Erhebung mit der grössten Höhe den grössten Abstand von der Schleifmittel-Unterlage. Diese erste Erhebung gerät daher zuerst mit einer bearbeiteten Oberfläche in Kontakt und entfaltet somit seine Schleifwirkung. Wenn ein Teil der ersten Erhebung bei der Bearbeitung abgetragen wird, so nimmt die Gesamthöhe des Schleifkorns ab. Ist diese Gesamthöhe gleich der Höhe einer zweiten Erhebung mit der zweitgrössten Höhe, so gerät auch diese zweite Erhebung in Kontakt mit der bearbeiteten Oberfläche, so dass sie dann ebenfalls ihre Schleifwirkung entfalten kann.

In möglichen Ausgestaltungen kann das Schleifkorn auch mehr als zwei Erhebungen mit jeweils verschiedenen senkrecht zur Basisfläche gemessenen Höhen aufweisen. Je mehr Erhebungen mit verschiedenen Höhen das Schleifkorn hat, desto häufiger kann während der Bearbeitung einer Oberfläche eine neue, frische Erhebung in Kontakt mit dieser Oberfläche geraten. Natürlich ist es auch denkbar und liegt im Rahmen der Erfindung, dass zwei oder mehr Erhebungen im Wesentlichen die gleiche Höhe aufweisen; auf jeden Fall soll das Schleifkorn aber mindestens zwei Erhebungen mit verschiedenen Höhen enthalten.

Das Schleifkorn kann ebene und/oder konkav gewölbte und/oder konvex gewölbte Oberflächenbereiche aufweisen. Dabei können mehrere Oberflächenbereiche auch verschiedene Wölbungen aufweisen.

Alternativ oder zusätzlich kann das Schleifkorn auch mindestens eine Öffnung aufweisen, die als Sackloch oder als durchgehende Öffnung ausgebildet sein kann. Bevorzugt kann diese Öffnung im Aufsatzkörper enthalten sein, insbesondere an einem dem Basiskörper abgewandten Ende des Aufsatzkörpers. Eine solche Öffnung bildet weitere Kanten. Dies resultiert in einer besonderen Schärfe des Schleifkorns, die wiederum einen deutlich erhöhten Materialabtrag erlaubt. Insbesondere kann die Öffnung auch als Flüssigkeitsreservoir oder zur Aufnahme von Schmiermittel dienen. Durch die Öffnung verringert sich auch der Querschnitt des Schleifkorns, der an einer zu bearbeitenden Oberfläche angreift.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Insbesondere kann die Gesamthöhe des Schleifkorns in dem genannten Bereich liegen. Unter der Gesamthöhe des Schleifkorns wird der grösste senkrecht zur Basisfläche gemessene Abstand eines Punktes des Schleifkorns von der Basisfläche verstanden.

Analog können einem Basiskörper und einem Aufsatzkörper jeweils eine Höhe zugeordnet werden, die ebenfalls senkrecht zur Ebene der Basisfläche gemessen wird. Das Verhältnis aus der Höhe des Basiskörpers und der Höhe des Aufsatzkörpers kann im Bereich von 1:1 bis 1:8, bevorzugt von 1:2 bis 1:6, besonders bevorzugt von 1:4 bis 1:5 liegen. Höhenverhältnisse in diesem Bereich erlauben eine ausreichende Fixierung des Schleifkorns auf einer Schleifmittel-Unterlage und eine ausreichende Stabilität gegenüber Kippkräften, die bei der Bearbeitung einer Oberfläche auftreten können.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;

- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise wird die Basisfläche des Schleifkorns oder eine Grundfläche eines Kegels oder Kegelstumpfs auch dann als im Wesentlichen eben verstanden, wenn sie gewölbt ist und Krümmungsradien aufweist, die mindestens das Doppelte, bevorzugt mindestens das Fünffache, besonders bevorzugt mindestens das Zehnfache der Gesamthöhe des Schleifkorns betragen. Zudem wird ein Teilkörper auch dann als Kegel angesehen, wenn die Mantellinien zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Gesamthöhe des Schleifkorns beträgt.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen Material oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet. Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle oder eines Attritors.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Bevorzugt weisen die Vertiefungen der Giessform jeweils eine Oberfläche auf, deren Form komplementär zur Form des Teils der Oberfläche des Schleifkorns ist, der nicht die Basisfläche des Schleifkorns bildet. Die Basisfläche des Schleifkorn kann dann aus der oberen freien, nicht in Kontakt mit der Giessform stehenden Fläche der Dispersion entstehen. Aufgrund des Schrumpfens während des Schritts d) ist es möglich, dass die Basisfläche nicht vollständig eben ist, sondern eine geringfügige Wölbung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so auf einer Schleifmittel-Unterlage orientiert, dass die Erhebungen von der Unterlage weg weisen. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1: eine erste Ausführungsform eines erfindungsgemässen Schleifkorns in einer perspektivischen Ansicht;
Figuren 2a bis f: Draufsichten auf mehrere Ausführungsformen erfindungsgemässer Schleifkörner;
Figur 3: eine perspektivische Ansicht eines weiteren erfindungsgemässen Schleifkorns;
Figuren 4a bis c: eine Draufsicht und zwei Seitenansichten auf ein weiteres erfindungsgemässes Schleifkorns;
Figur 5: eine perspektivische Ansicht eines weiteren Schleifkorns.

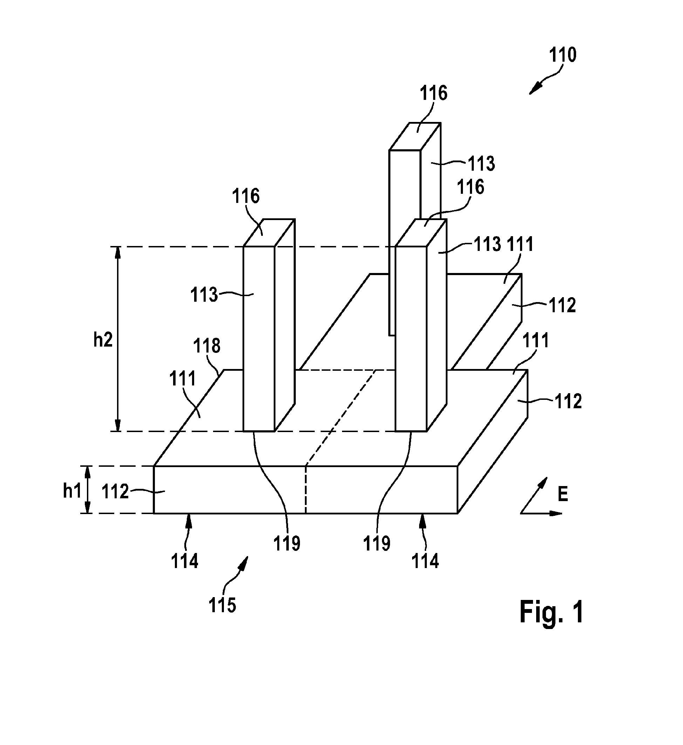

Figur 1 zeigt ein erstes erfindungsgemässes Schleifkorn 110 in einer perspektivischen Ansicht. Dieses enthält drei Teilkörper 111, aus denen das Schleifkorn 110 gedanklich zusammengesetzt ist. Die Teilkörper 111 sind in Figur 1 durch gestrichelte Linien voneinander getrennt dargestellt. Tatsächlich ist das Schleifkorn 110 jedoch bevorzugt einstückig ausgebildet. Jeder der drei Teilkörper 111 enthält jeweils einen Basiskörper 112 und einen sich davon erstreckenden Aufsatzkörper 113, der eine Erhebung des Schleifkorns 110 bildet. Die Unterseiten 114 der Basiskörper 112 bilden zusammen die hier nicht erkennbare ebene Basisfläche 115 des Schleifkorns 110. Die Oberseiten 116 der Aufsatzkörper 113 bilden die höchsten Punkte der Aufsatzkörper 113. Die senkrechten Projektionen der Oberseiten 116 auf die Ebene E der Basisfläche 115 liegen vollständig innerhalb der Basisfläche 115 und damit in der konvexen Hülle der Basisfläche 115. Diese Ausgestaltung erlaubt es einerseits, dass das Schleifkorn 110 auch mit Hilfe einer mechanischen Streuung mit grosser Wahrscheinlichkeit mit seiner Basisfläche 115 auf einer Schleifmittel-Unterlage zu liegen kommt. In dieser Orientierung weisen dann alle drei Aufsatzkörper 113 von der Unterlage weg, so dass die von den Basiskörpers 112 abgewandten Enden der Aufsatzkörper 113 eine Schleifwirkung erzeugen können.

Jeder der drei Basiskörper 112 hat die Form eines Quaders, also eines speziellen geraden Zylinders mit rechteckiger Grundfläche. Auch die drei Aufsatzkörper 113 haben jeweils die Form eines Quaders, jedoch mit einer kleineren Grundfläche parallel zur Ebene E und einer grösseren Höhe senkrecht zur Ebene E. Die Aussenkontur 119 der Aufsatzkörpers 113 liegt jeweils vollständig innerhalb der Aussenkontur 118 des zugehörigen Basiskörpers 112. Dies verleiht dem Schleifkorn 110 eine besondere Stabilität.

Der Basiskörper 112 hat eine Höhe h1, und der Aufsatzkörper 113 hat eine Höhe h2. Das Verhältnis von h1 und h2 kann im Bereich von 1:1 bis 1:8 liegen. Beispielsweise könnte h1=0,3 mm und h2=1,2 mm sein. Die Gesamthöhe h1+h2 des Schleifkorns 110 beträgt in diesem Beispiel dann 1,5 mm.

Die Figur 1 zeigt eine in geometrischer Hinsicht idealisierte Form, bei der im Übergangsbereich vom Basiskörper 112 zum Aufsatzkörper 113 eine scharfe Kante gebildet ist. Wie jedoch oben erläutert wurde, können derart scharfe Kanten insbesondere bei den bevorzugten keramischen Schleifkörnern zu einem Bruch an dieser Kante führen. Daher ist es aus technischer Sicht in vielen Ausführungsformen bevorzugt, wenn in dem genannten Übergangsbereich keine scharfe Kante vorliegt, sondern eine hier nicht dargestellte Rundung oder Fase. Die Ausdehnung dieser Rundung oder Fase sowohl parallel zur Ebene E als auch senkrecht zu dieser Ebene kann beispielsweise im Bereich von 1/20 bis 1/5, bevorzugt von 1/15 bis 1/5 der Höhe des Aufsatzkörpers 113 oder der Gesamthöhe h des Schleifkorns 110 liegen.

Wie der Figur 1 zu entnehmen ist, kann jeder der drei Teilkörper 111 in jeden der beiden jeweils anderen Teilkörper 111 durch eine Verschiebung parallel zur Ebene E der Basisfläche 115 überführt werden. Diese Form des Schleifkorns 110 führt zu einer wohldefinierten Schleifwirkung, da insbesondere die drei Oberseiten 116 der Aufsatzkörper 113 einen wohldefinierten Lage zueinander haben.

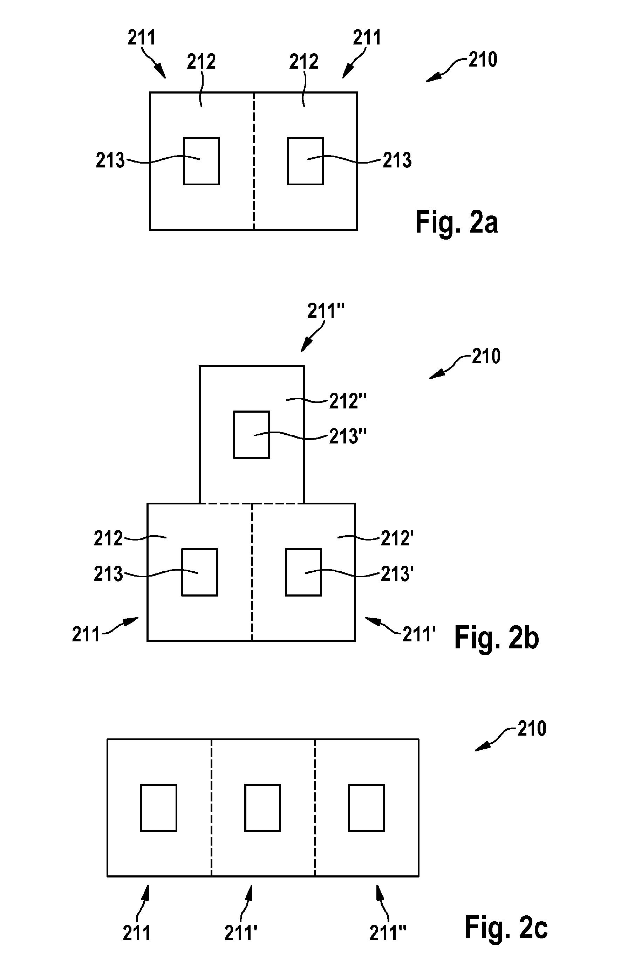

In den Figuren 2a bis 2f sind Draufsichten auf mehrere mögliche erfindungsgemässe Schleifkörner 210 gezeigt. Diese enthalten jeweils zwei oder drei gedachte Teilkörper 211, 211', 211". Zeichnerisch sind diese Teilkörper 211, 211', 211" durch gestrichelte Linien voneinander getrennt, obwohl die Schleifkörner 210 bevorzugt einstückig ausgebildet sind.

Das Schleifkorn 210 gemäss Figur 2a weist zwei Teilkörper 211 mit jeweils quaderförmigem Basiskörper 212 und quaderförmigem Aufsatzkörper 213 auf, die nebeneinander angeordnet sind.

Das in Figur 2b gezeigte Schleifkorn 210, welches sehr ähnlich zu dem in Figur 1 dargestellten Schleifkorn 110 ist, enthält drei Teilkörper 211, 211', 211" mit jeweils quaderförmigem Basiskörper 212 und quaderförmigem Aufsatzkörper 213. Die drei Teilkörper 211, 211', 211" sind paarweise durch Verschiebung parallel zur Ebene der Basisfläche 215 ineinander überführbar, die hier mit der Zeichenebene übereinstimmt. Dabei ist die Richtung der Verschiebung zwischen dem Teilkörper 211 und dem Teilkörper 211' unter einem Winkel zur Richtung der Verschiebung zwischen dem Teilkörper 211 und dem Teilkörper 211" angeordnet.

Das Schleifkorn 210 gemäss Figur 2c enthält ebenfalls drei identische Teilkörper 211, 211', 211", die jedoch entlang einer geraden Linie angeordnet sind.

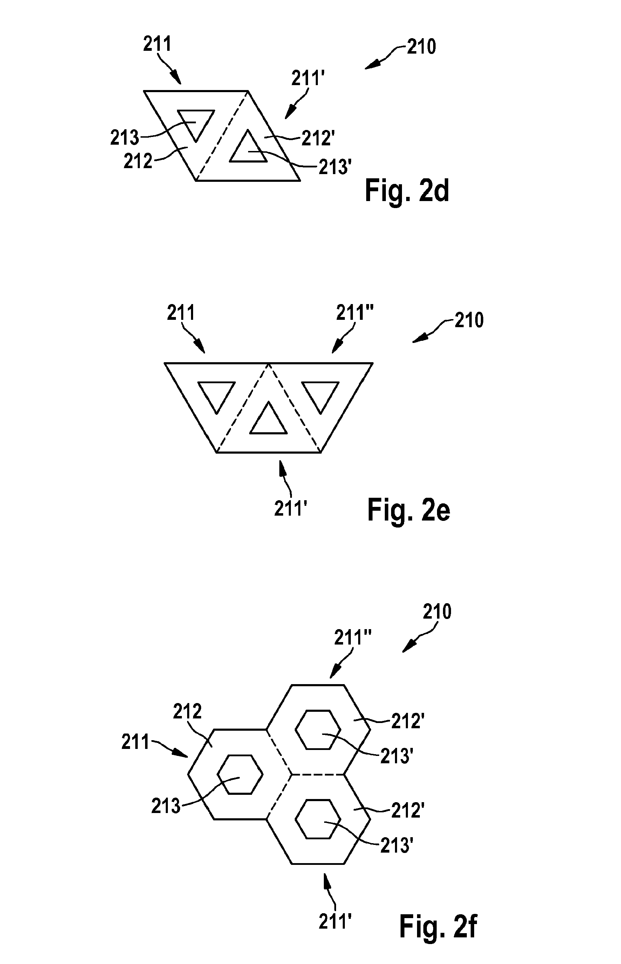

Das Schleifkorn 210 gemäss Figur 2d enthält zwei Teilkörper 211, 211', deren Basiskörper 212, 212' durch Prismen (also spezielle Zylinder) mit einer Grundfläche in der Form eines gleichseitigen Dreiecks gebildet sind. Auch die Aufsatzkörper 213, 213' sind durch solche Prismen gebildet. Der Teilkörper 211 lässt sich durch eine geometrische Abbildung in den Teilkörper 211' überführen, die aus einer Verschiebung parallel zur Ebene der Basisfläche und einer Drehung um 180° um eine Drehachse zusammengesetzt ist, die senkrecht zu dieser Ebene verläuft.

Das in Figur 2e gezeigte Schleifkorn 210 enthält drei Teilkörper 211, 211', 211", die entlang einer gemeinsamen geraden Linie und durch Drehung um 180° ineinander überführt werden können.

Das Schleifkorn 210 gemäss Figur 2f enthält drei Teilkörper 211, 211', 211", deren Basiskörper 212, 212', 212" durch Prismen mit einer Grundfläche in der Form eines gleichseitigen Sechsecks gebildet sind. Auch die Aufsatzkörper 213, 213', 213" sind durch solche Prismen gebildet. Die drei Teilkörper 211, 211', 211" lassen sich durch eine Verschiebung parallel zur Ebene der Basisfläche ineinander überführen. Wie in Figur 2b ist die Richtung der Verschiebung zwischen dem Teilkörper 211 und dem Teilkörper 211' unter einem Winkel zur Richtung der Verschiebung zwischen dem Teilkörper 211 und dem Teilkörper 211" angeordnet.

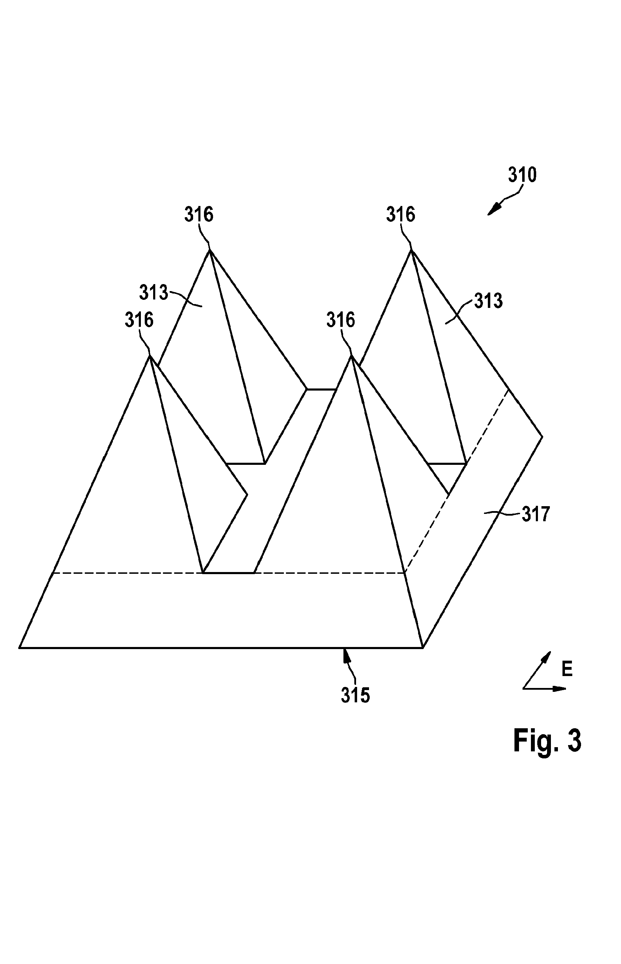

Das in Figur 3 dargestellte Schleifkorn 310 enthält eine Basisfläche 315, von der sich vier Erhebungen 413 erstrecken, die jeweils die Form einer Pyramide mit einer Grundfläche in Form eines Quadrates aufweisen. Die vier Erhebungen 413 sind auf einem Sockel 317 aufgesetzt, der die Form eines Pyramidenstumpfs mit ebenfalls quadratischer Grundfläche aufweist. Die vier Erhebungen 313 enthalten jeweils genau einen höchsten Punkt 316, der durch die Spitze der Pyramide gebildet ist. Die vier Erhebungen 313 bilden jeweils Teilkörper, die paarweise durch eine Verschiebung parallel zur Ebene E der Basisfläche 315 ineinander übergehen.

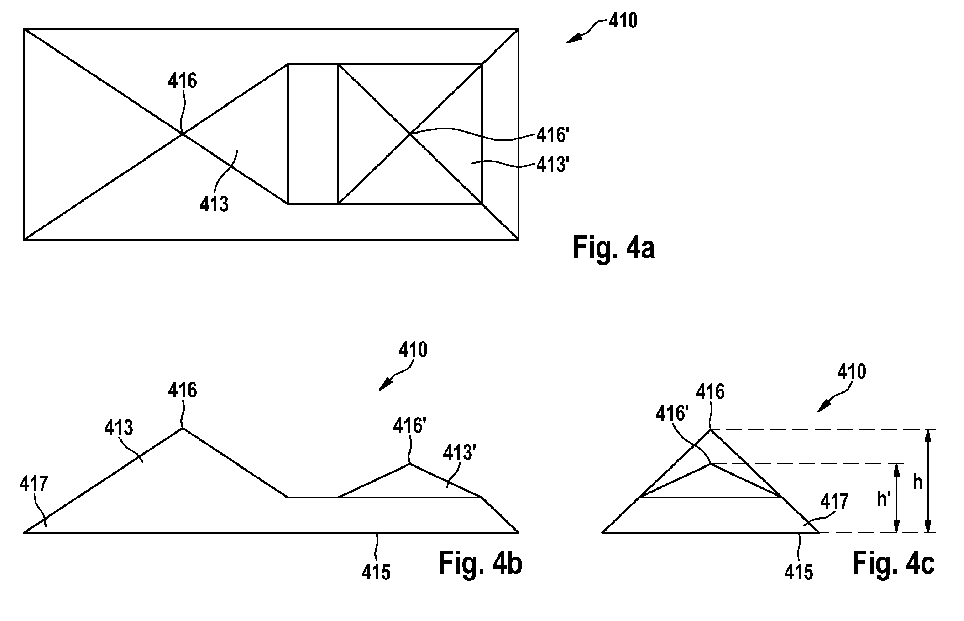

Die Figuren 4a bis 4b zeigen drei Ansichten eines weiteren erfindungsgemässen Ausführungsbeispiels eines Schleifkorns 410. Dieses enthält einen Sockel 417, auf dem zwei Pyramiden aufgesetzt sind, die jeweils eine Erhebung 413, 413' des Schleifkorns 410 bilden. Im Gegensatz zu den zuvor beschriebenen Ausführungsbeispielen sind die beiden Erhebungen 413, 413' nicht durch eine Kombination einer Verschiebung und einer Drehung ineinander überführbar. Stattdessen kann die zweite Erhebung 413' nur durch eine Kombination aus einer Verschiebung und zwei Stauchungen in zwei zueinander senkrechten Richtungen überführt werden. Insbesondere haben die beiden Spitzen 416, 416' der Pyramiden 413, 413' zwei verschiedene Höhen h, h'. Die Spitze 416 gerät daher zuerst mit einer bearbeiteten Oberfläche in Kontakt und entfaltet somit seine Schleifwirkung. Wenn ein Teil der ersten Erhebung 413 bei der Bearbeitung abgetragen wird, so nimmt die Gesamthöhe des Schleifkorns ab. Ist diese Gesamthöhe gleich der Höhe h' der zweiten Erhebung 413', so gerät auch diese zweite Erhebung 413' in Kontakt mit der bearbeiteten Oberfläche, so dass sie dann ebenfalls ihre Schleifwirkung entfalten kann.

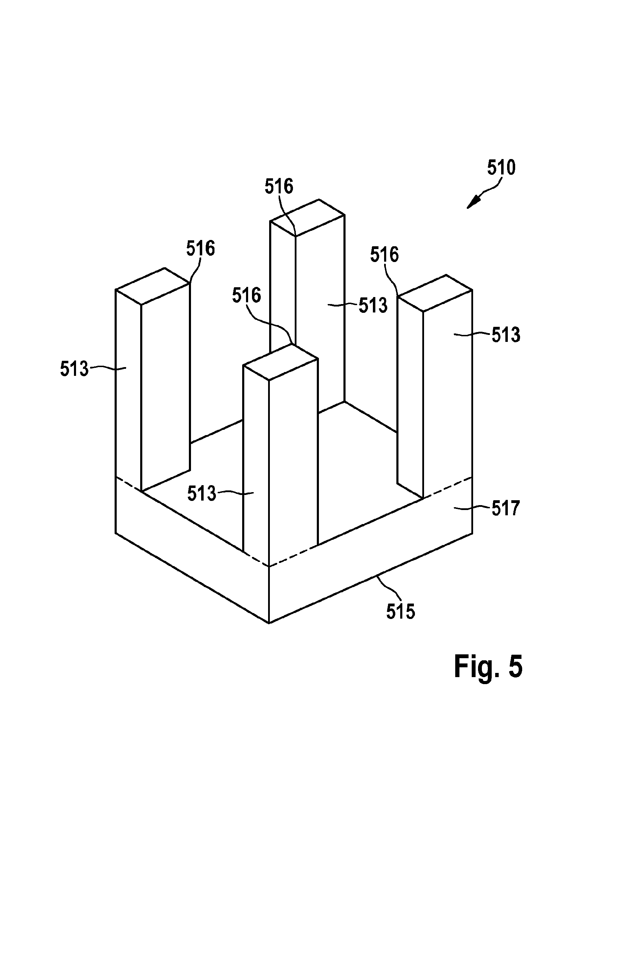

Das in Figur 5 gezeigte Schleifkorn 510 enthält einen quaderförmigen Sockel 517 und vier ebenfalls quaderförmige Erhebungen 513, die sich von den vier Ecken der rechteckigen Oberseite des Sockels 517 erstrecken. Jede dieser Erhebungen enthält mindestens einen höchsten Punkt 516, dessen senkrechte Projektion auf die Basisfläche 515 innerhalb der Basisfläche 515 liegt.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. Die Basisfläche des Schleifkorns kann dann aus der oberen freien, nicht in Kontakt mit der Giessform stehenden Fläche der Dispersion entstehen. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (110; 210; 310; 410; 510) mit einer Basisfläche (115; 315; 415; 515) und mindestens zwei sich davon erstreckenden Erhebungen (113; 213; 213'; 213"; 313; 413; 413'; 513),
**dadurch gekennzeichnet, dass**
mindestens eine Erhebung (113; 213; 213'; 213"; 313; 413; 413'; 513), bevorzugt mehrere Erhebungen (113; 213; 213'; 213"; 313; 413; 413'; 513), besonders bevorzugt jede Erhebung (113; 213; 213'; 213"; 313; 413; 413'; 513) mindestens einen höchsten Punkt (116; 316; 416; 516) enthält, dessen senkrechte Projektion auf die Ebene (E) der Basisfläche (115; 315; 415; 515) innerhalb der konvexen Hülle der Basisfläche (115; 315; 415; 515), bevorzugt innerhalb der Basisfläche (115; 315; 415; 515) liegt.

2. Schleifkorn (110; 210; 310; 410; 510) gemäss Anspruch 1,
**dadurch gekennzeichnet, dass**
das Schleifkorn (110; 210; 310; 410; 510) mindestens zwei, bevorzugt mindestens drei Teilkörper (111; 211; 211'; 211"; 313; 413; 413'; 513) enthält oder daraus besteht, die jeweils mindestens eine der Erhebungen (113; 213; 213'; 213"; 313; 413; 413'; 513), bevorzugt genau eine der Erhebungen (113; 213; 213'; 213"; 313; 413; 413'; 513) aufweisen oder bilden.

3. Schleifkorn (110; 210; 310; 510) gemäss 2,
**dadurch gekennzeichnet, dass**
ein erster Teilkörper (111; 211; 211'; 211"; 313; 513) durch eine geometrische Abbildung in einen zweiten Teilkörper (111; 211; 211'; 211"; 313; 513) überführbar ist, wobei die geometrische Abbildung durch eine Verschiebung parallel zur Ebene (E) der Basisfläche (115; 315; 415; 515) gebildet ist.

4. Schleifkorn (210) gemäss einem der Ansprüche 2 und 3,
**dadurch gekennzeichnet, dass**
ein erster Teilkörper (211) durch eine geometrische Abbildung in einen zweiten Teilkörper (211') überführbar, die durch eine Kombination aus einer Verschiebung parallel zur Ebene der Basisfläche und einer Drehung um eine senkrecht zur Basisfläche verlaufende Drehachse gebildet ist.

5. Schleifkorn (110; 210; 310; 410) gemäss einem der Ansprüche 2 bis 4, **dadurch gekennzeichnet, dass**
das Schleifkorn (110; 210; 310; 410) höchstens 9 Teilkörper (111; 211; 211'; 211"; 413; 413') enthält oder daraus besteht und/oder der Durchmesser der Basisfläche (115; 315; 415; 515) im Bereich von 0,3 mm bis 6 mm, bevorzugt von 0,8 mm bis 5 mm, besonders bevorzugt von 1,1 mm bis 4 mm liegt.

6. Schleifkorn (110; 210) gemäss einem der Ansprüche 2 bis 5,
**dadurch gekennzeichnet, dass**
mindestens ein, bevorzugt mehrere, besonders bevorzugt jeder Teilkörper (111; 211; 211'; 211") einen Basiskörper (112; 212; 212'; 212") enthält sowie mindestens einen Aufsatzkörper (113; 213; 213'; 213"), der eine der Erhebungen (113; 213; 213'; 213") des Schleifkorns (110; 210) bildet.

7. Schleifkorn (110; 210) gemäss Anspruch 6,
**dadurch gekennzeichnet, dass**
mindestens ein Basiskörper (112; 212; 212'; 212"), bevorzugt mehrere Basiskörper (112; 212; 212'; 212") und besonders bevorzugt alle Basiskörper (112; 212; 212'; 212") die Form eines Zylinders oder eines Kegelstumpfs aufweisen.

8. Schleifkorn (110; 210; 310; 410; 510) gemäss einem der vorangehenden Ansprüche,
**dadurch gekennzeichnet, dass**
mindestens eine Erhebung (113; 213; 213'; 213"; 313; 413; 413'; 513), bevorzugt mehrere Erhebungen (113; 213; 213'; 213"; 313; 413; 413'; 513) und besonders bevorzugt alle Erhebungen (113; 213; 213'; 213"; 313; 413; 413'; 513) die Form eines Zylinders oder eines Kegelstumpfs oder eines Kegels haben.

9. Schleifkorn (110; 210; 310; 410; 510) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (110; 210; 310; 410; 510),
**dadurch gekennzeichnet, dass**
sie mindestens 20 Gew.-%, bevorzugt mindestens 50 Gew.-%, besonders bevorzugt mindestens 90 Gew.-% Schleifkörner (110; 210; 310; 410; 510) nach einem der vorangehenden Ansprüche enthält.

11. Verfahren zum Herstellen mindestens eines Schleifkorns (110; 210; 310; 410; 510) oder einer Gesamtheit von Schleifkörnern (110; 210; 310; 410; 510) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (110; 210; 310; 410; 510) zu erhalten.

12. Giessform zum Herstellen mindestens eines Schleifkorns (110; 210; 310; 410; 510) nach einem der Ansprüche 1 bis 9, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (110; 210; 310; 410; 510) ist.

13. Schleifartikel, enthaltend eine Gesamtheit von Schleifkörnern (110; 210; 310; 410; 510) gemäss Anspruch 10.

14. Verfahren zum Herstellen eines Schleifartikels gemäss Anspruch 13, enthaltend einen Schritt, in dem eine Gesamtheit von Schleifkörnern (110; 210; 310; 410; 510) gemäss Anspruch 10 an und/oder in einem Substrat fixiert wird, insbesondere mittels eines Bindemittels.

15. Verfahren zum Schleifen einer Oberfläche, insbesondere einer lackierten Oberfläche, mit einem Schleifartikel gemäss Anspruch 13.
